# EUROPEAN PATENT SPECIFICATION

(11) **EP 3 246 617 B1**
(45) Date of publication and mention of the grant of the patent: **02.12.2020**
(21) Application number: 17171147.6
(22) Date of filing: 15.05.2017
(51) Int. Cl.: F17C 1/00

(54) **CONFORMABLE PRESSURE VESSEL**
ANPASSBARER DRUCKBEHÄLTER
CUVE DE PRESSION CONFORMABLE

(30) Priority: 16.05.2016 IN 201611016929
(43) Date of publication of application: 22.11.2017
(73) Proprietor: Goodrich Corporation, Charlotte, NC 28217-4578 (US)
(72) Inventor: Saini, Mohinder, Bangalore, Karataka 560066 Karnatka (IN); Andanda Rao, Sreekanth Koti, Bangalore, Karnataka 560061 (IN); Panda, Satya Swaroop, Bangalore, Karnataka 560037 (IN); Jordan, Patrick A., Phoenix, AZ 85044 (US); Werbelow, Jeffrey, Phoenix, AZ 85048 (US)
(74) Representative: Dehns

(56) References cited:
- WO-A1-90/12982
- WO-A1-98/14362
- WO-A1-2014/123928
- WO-A1-2016/057023
- DE-A1- 19 831 257
- DE-A1-102013 002 944
- DE-C- 94 916
- GB-A- 879 966
- US-A- 4 375 877
- US-A1- 2013 092 561

## Description

### BACKGROUND

The subject matter disclosed herein generally relates to pressure vessels, and more particularly to pressure vessels for aircraft emergency evacuation systems.

Aircraft emergency evacuation systems commonly contain inflatable rescue apparatuses to aid in an emergency evacuation of an aircraft. For example, the inflatable rescue apparatus may be a slide suitable for assisting occupants in descending from a floor-level aircraft exit or from an aircraft wing. In another example, the inflatable rescue apparatus may be a life raft suitable for floating on water and carrying passengers following a water landing. The aircraft inflatable rescue apparatus may be packed on a packboard (i.e. support structure), which attaches to an aircraft door or in the fuselage. Commonly, the inflatable rescue apparatus is packed(i.e. folded) in the available space over and around a cylindrical pressure vessel positioned on the packboard. Packing the inflatable rescue apparatus in the available space over and around the cylindrical pressure vessel is a challenge and requires extensive labor. There is a need to reduce the overall space occupied by the inflatable rescue apparatus over the packboard and increase the volumetric efficiency of the aircraft emergency evacuation system. US 4375877A describes a self-contained emergency evacuation system including an escape slide. WO 2016/057023 A1 describes a pressure vessel to store high pressure fluid. WO 90/12982 A1 describes a flexible container for compressed gases.

### SUMMARY

deleted

deleted

deleted

deleted

deleted

deleted

deleted

According to one embodiment, an aircraft emergency evacuation system is provided and defined in claim 1. The aircraft emergency evacuation system having: an inflatable rescue apparatus; and a conformable pressure vessel operatively connected to the inflatable rescue apparatus. The conformable pressure vessel in operation inflates the inflatable rescue apparatus. The conformable pressure vessel having a plurality of individual pressure vessels. The individual pressure vessels each have an outer wall enclosing an inner volume. The inner volumes are fluidly connected to each other. The individual pressures vessels are arranged parallel to each other.

In addition to one or more of the features described above, or as an alternative, further embodiments of the aircraft emergency evacuation system may include that the plurality of individual pressures vessels form at least one of a flat planar shape, a bent planar shape, a semi-cylindrical shape, a parabolic shape, and an arc shape.

In addition to one or more of the features described above, or as an alternative, further embodiments of the aircraft emergency evacuation system may include that the individual pressure vessels have an elongated tubular profile.

In addition to one or more of the features described above, or as an alternative, further embodiments of the aircraft emergency evacuation system may include that the inner volumes are fluidly connected to each other through a manifold.

In addition to one or more of the features described above, or as an alternative, further embodiments of the aircraft emergency evacuation system may include that the inner volumes are fluidly connected to each other through a plurality of elbow connectors.

In addition to one or more of the features described above, or as an alternative, further embodiments of the aircraft emergency evacuation system may include that each individual pressure vessel shares a common outer wall with at least one adjacent individual pressure vessel.

In addition to one or more of the features described above, or as an alternative, further embodiments of the aircraft emergency evacuation system may include that a thickness of the common outer wall increases at the elbow connector.

According to another embodiment, a method of assembling an aircraft emergency evacuation system is provided. The method including the steps of: installing a conformable pressure vessel onto a support structure; packing an inflatable rescue apparatus into the support structure; and operatively connecting the conformable pressure vessel to the inflatable rescue apparatus. The conformable pressure vessel in operation inflates the inflatable rescue apparatus. The conformable pressure vessel having a plurality of individual pressure vessels. The individual pressure vessels each having an outer wall enclosing an inner volume. The inner volumes are fluidly connected to each other. The individual pressures vessels are arranged parallel to each other.

In addition to one or more of the features described above, or as an alternative, further embodiments of the method may include that the plurality of individual pressures vessels form at least one of a flat planar shape, a bent planar shape, a semi-cylindrical shape, a parabolic shape, and an arc shape.

In addition to one or more of the features described above, or as an alternative, further embodiments of the method may include that the individual pressure vessels have an elongated tubular profile.

In addition to one or more of the features described above, or as an alternative, further embodiments of the method may include that the inner volumes are fluidly connected to each other through a manifold.

In addition to one or more of the features described above, or as an alternative, further embodiments of the method may include that the inner volumes are fluidly connected to each other through a plurality of elbow connectors.

In addition to one or more of the features described above, or as an alternative, further embodiments of the method may include that each individual pressure vessel shares a common outer wall with at least one adjacent individual pressure vessel.

Technical effects of embodiments of the present disclosure include an aircraft emergency evacuation system having a conformable pressure vessel to reduce the weight and footprint of the aircraft emergency evacuation systems. Further technical effects include fluidly connecting a plurality of individual pressure vessels to compose the conformable pressure vessel and having the individual pressure vessels oriented parallel to each other.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The subject matter is particularly pointed out and distinctly claimed at the conclusion of the specification. The foregoing and other features, and advantages of the present disclosure are apparent from the following detailed description taken in conjunction with the accompanying drawings in which:
FIG. 1 is a perspective view of an aircraft emergency evacuation system;
FIG. 2 is a cross-sectional view of an aircraft emergency evacuation system;
FIG. 3 is a cross-sectional view of an aircraft emergency evacuation system, according to embodiments of the present disclosure;
FIG. 4 is a perspective view of a protective casing for a conformable pressure vessel of the aircraft emergency evacuation system of FIG. 3, according to embodiments of the present disclosure;
FIG. 5 is a perspective view of a conformable pressure vessel that may be in the aircraft emergency evacuation system of FIG. 3, according to an embodiment of the present disclosure;
FIG. 6 is a cross-sectional view of the conformable pressure vessel of FIG. 5, according to an embodiment of the present disclosure;
FIG. 7 is a cross-sectional view of a conformable pressure vessel with serpentine flow path that may be in the aircraft emergency evacuation system of FIG. 3, according to an embodiment of the present disclosure;
FIG. 8 is a perspective view of a conformable pressure vessel with serpentine flow path that may be in the aircraft emergency evacuation system of FIG. 3, according to an embodiment of the present disclosure;
FIG. 9 is a cross-sectional view of the conformable pressure vessel with serpentine flow path of FIG. 8, according to an embodiment of the present disclosure;
FIG. 10 is an enlarged cross-sectional view of the conformable pressure vessel with serpentine flow path of FIG. 9, according to an embodiment of the present disclosure;
FIG. 11 is a cross-sectional view of conformable pressure vessel with serpentine flow path of FIG. 8, according to an embodiment of the present disclosure;
FIG. 12 is an enlarged cross-sectional view of the conformable pressure vessel with serpentine flow path of FIG. 9, according to an embodiment of the present disclosure;
FIG. 13 is a flow diagram illustrating a method of assembling the aircraft emergency evacuation system of FIG. 3, according to an embodiment of the present disclosure.
The detailed description explains embodiments of the present disclosure, together with advantages and features, by way of example with reference to the drawings.

### DETAILED DESCRIPTION

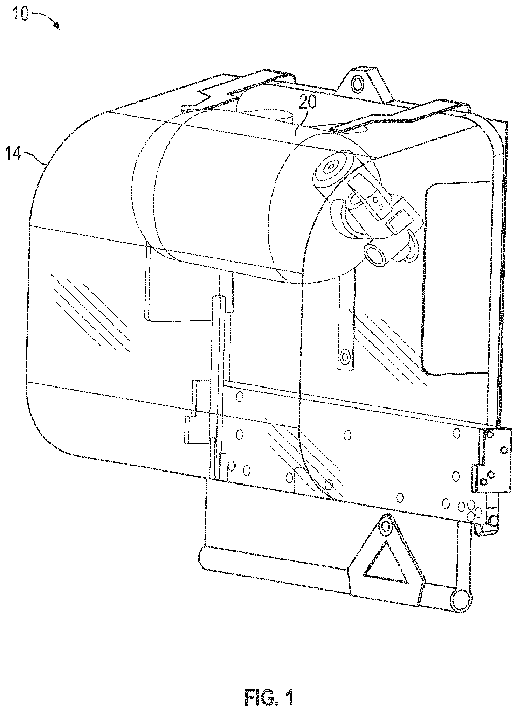

Referring now to FIG. 1, which shows a perspective view of an aircraft emergency evacuation system 10. The structural support 14 encloses the aircraft emergency evacuation system 10, which includes a large cylindrical pressure vessel 20. The structural support 14 also provides a mounting system for various components of the aircraft emergency evacuation system 10. As can be seen in FIG. 1, the large cylindrical pressure vessel 20 is mounted to the inside of the structural support 14 and takes up a large amount of space within the structural support 14.

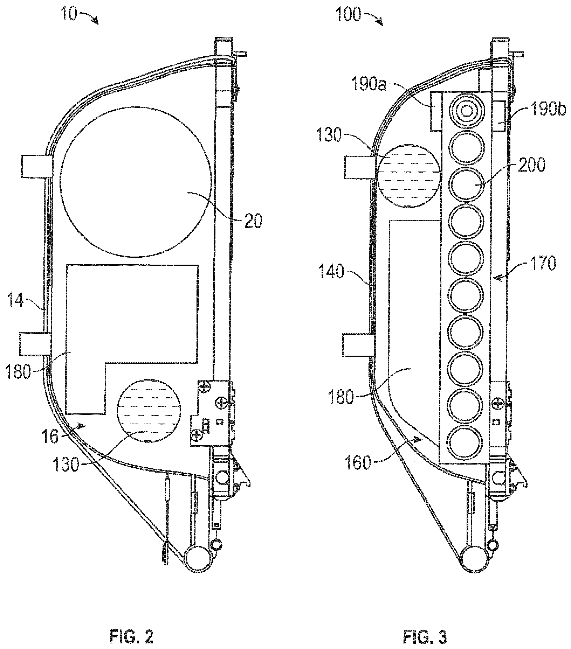

Turning now to FIGs. 2 and 3. FIG. 2 shows a cross-sectional view of the aircraft emergency evacuation system 10 of FIG. 1. The aircraft emergency evacuation system 10 of FIG. 2 comprises an inflatable rescue apparatus 180 and a large cylindrical pressure vessel 20. The large cylindrical pressure vessel 20 is operatively connected to the inflatable rescue apparatus 180, which may include, but is not limited to a slide, raft, and/or any other inflatable rescue apparatus known to one of skill in the art. The large cylindrical pressure vessel 20 may contain a compressed gas and in operation inflates the inflatable rescue apparatus 180 with the compressed gas. Also included in the aircraft emergency evacuation system 10 is an aspirator 130. The aspirator 130 is operably connected to the inflatable rescue apparatus 180 and the large cylindrical pressure vessel 20. The aspirator 130 in operation assists in inflating the inflatable rescue apparatus 180 by pulling in external air to help inflate the inflatable rescue apparatus 180.

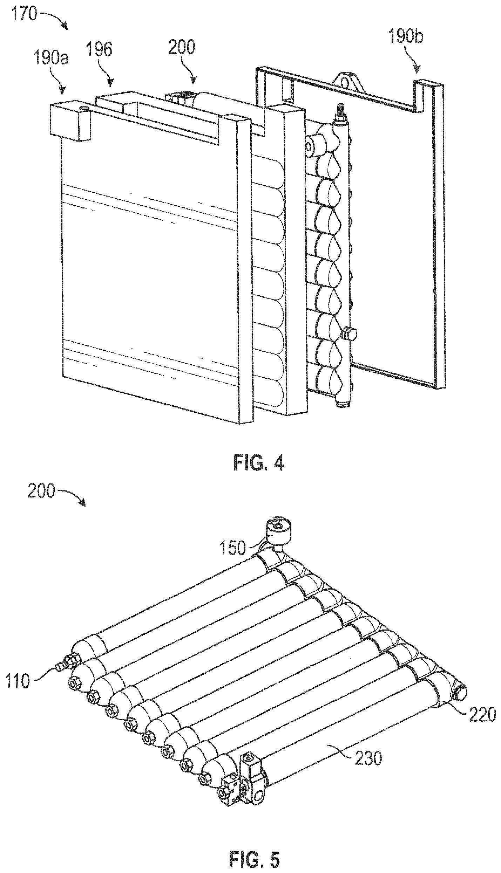

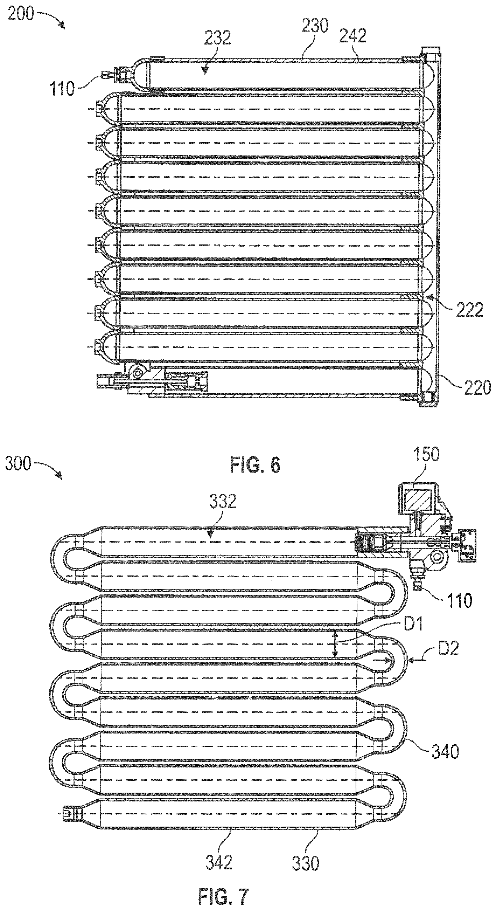

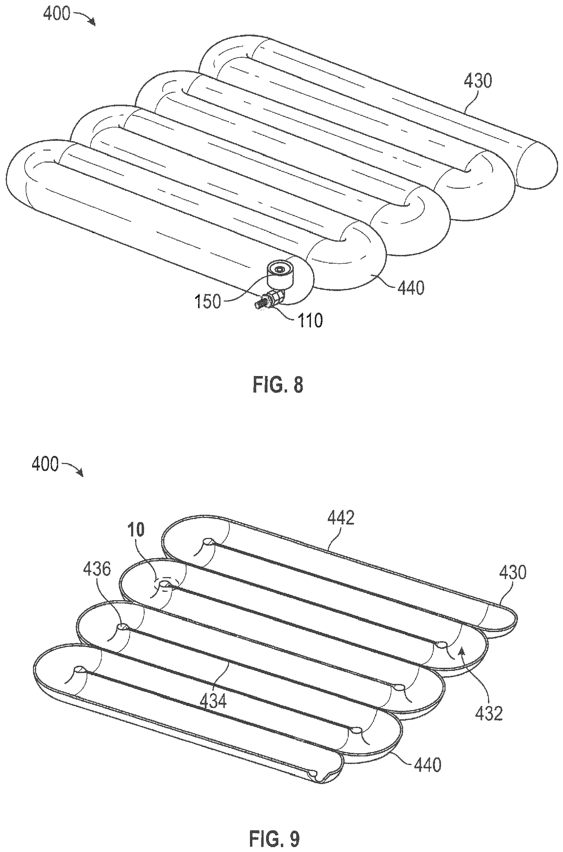

FIG. 3 shows a cross-sectional view of an aircraft emergency evacuation system 100, according to embodiments of the present disclosure. The aircraft emergency evacuation system 100 of FIG. 3 comprises an inflatable rescue apparatus 180 and a conformal pressure vessel 200 (Please note that the conformable pressure vessel may be the conformable pressure vessel 200 of FIGs. 5-6, conformable pressure vessel 300 with serpentine flow path of FIG. 7, or conformable pressure vessel 400 with serpentine flow path of FIGs. 8-12). The conformable pressure vessel 200, 300, 400 may conform to the shape of the support structure 140, where the conformable pressure vessel 200, 300, 400 is mounted. The conformable pressure vessel 200, 300, 400 is operatively connected to the inflatable rescue apparatus 180, which may include, but is not limited to a slide, raft, and/or any other inflatable rescue apparatus known to one of skill in the art. The conformable pressure vessel 200, 300, 400 may contain a compressed gas and in operation inflates the inflatable rescue apparatus 180 with the compressed gas. Also included in the aircraft emergency evacuation system 100 is an aspirator 130. The aspirator 130 is operably connected to the inflatable rescue apparatus 180 and the conformable pressure vessel 200, 300, 400. The aspirator 130 in operation assists in inflating the inflatable rescue apparatus 180 by pulling in external air to help inflate the inflatable rescue apparatus 180.

In comparing the aircraft emergency evacuation system 10 of FIG. 2 to the aircraft emergency evacuation system 100 of FIG. 3, a few differences may be seen. The smaller width of the conformable pressure vessel 200, 300, 400 in comparison to the large cylindrical pressure vessel 20 allows these differences. Advantageously, the smaller width of the conformable pressure vessel 200, 300, 400 allows a smaller support structure 14, which leads to space and weight savings. This space savings is visibly evident when comparing the support structure 14 of FIG. 2 to the support structure 140 of FIG. 3. The large cylindrical pressure vessel 20 is wider than the conformable pressure vessel 200, 300, 400 and thus requires the support structure 14 also be wider in order to house the large cylindrical pressure vessel 20. Comparably, the conformable pressure vessel 200, 300, 400 allows the support structure 140 of FIG. 3 to be slimmer than the support structure 14 of FIG. 2. Also advantageously, the smaller width of the conformable pressure vessel 200, 300, 400 promotes more efficient utilization of interior space 160 and allows the inflatable rescue apparatus 180 to be more easily packed. The large cylindrical pressure vessel 20 in FIG. 2 requires more difficult packing configurations for the inflatable rescue apparatus 180 due to the oddly shaped interior space 16, as seen in FIG. 2.

Turning now FIGs. 3 and 4. FIG. 4 shows a perspective view of a protective casing 170 for the conformable pressure vessel 200, 300, 400 of the aircraft emergency evacuation system 100 of FIG. 3, according to embodiments of the present disclosure. (Please note that the protective case may contain conformable pressure vessel 200 of FIGs. 5-6, conformable pressure vessel 300 of FIG. 7, or conformable pressure vessel 400 of FIGs. 8-12) The protective casing 170 includes a hard cover 190 composed of a first cover 190a and a second cover 190b. The hard cover 190 in operation protects the conformable pressure vessel 200, 300, 400 from various impacts. The protective casing 170 also includes a foam liner 196, as seen in FIG. 4. The foam liner 196 in operation protects the conformable pressure vessel 200, 300, 400 from vibrations and/or shocks. Advantageously, the rectangular shape of the conformable pressure vessel 200, 300, 400 and the protective casing 170, allows the protective casing to provide additional structure support to the support structure 140 and creates a flat surface to help ease packing the adjacent inflatable rescue apparatus 180. Also advantageously, the protective casing 170 also helps maintain the planar shape of the conformable pressure vessel 200, 300, 400, when the conformable pressure vessel 200, 300, 400 is filled with compressed gas. The conformable pressure vessel 200, 300, 400 may conform to the shape of a wall where it is to be mounted. In another embodiment, the protective case forms a non-planar shape and the conformable pressure vessel 200, 300, 400 may conform to match that shape.

Turning now to FIGs. 5 and 6. FIG. 5 shows a perspective view of a conformable pressure vessel 200 that may be in the aircraft emergency evacuation system 100 of FIG. 3, according to an embodiment of the present disclosure. FIG. 6 shows a cross-sectional view of the conformable pressure vessel 200 of FIG. 5, according to an embodiment of the present disclosure. The conformable pressure vessel 200 of FIGs. 5 and 6 comprises a plurality of individual pressure vessels 230 fluidly connected to form a serpentine flow path. The individual pressure vessels 230 each have an outer wall 242 enclosing an inner volume 232. As can be seen in FIG. 6, the inner volumes 232 are fluidly connected to each other. In the illustrated embodiment of FIGs. 5 and 6, the inner volumes 232 are fluidly connected to each other through a manifold 220. As can be seen in FIG. 6, the interior 222 of the manifold 220 is hollow and thus allows the inner volumes 232 to fluidly connect to each other. The individual pressures vessels 230 are oriented parallel to each other, as seen in FIGs. 5 and 6.

Also, a valve 110 may be operatively connected to one of the pressure vessels 230. The valve 110 in operation may serve as a filling orifice, through which pressurized gas enters the conformable pressure vessel 200. Further, the valve 110 in operation may also serve as an emptying orifice, through which pressurized gas exits the conformable pressure vessel 200 and enters an inflatable rescue apparatus. The pressurized gas may include, but is not limited to nitrogen, carbon dioxide, oxygen, or any other gas or gas mixture known to one of skill in the art. The conformable pressure vessel 200 may also include pressure sensor 150. The pressure sensor 150 in operation detects the pressure of the pressurized gas in the inner volumes 232. The valve 110 and pressure sensor 150 may be mounted together or separately on the conformable pressure vessel 200. In the illustrated embodiment, the individual pressure vessels 230 have an elongated tubular profile. Also in the illustrated embodiment, the individual pressures vessels 230 are coplanar to each other, which gives the conformable pressure vessel 200 a rectangular profile. The individual pressure vessels 230 may not be coplanar (flat planar), but instead they may match the shape of the support structure to which they are mounted using variety of shapes, such as for example, a bent planar shape (intersection of two flat planes), a semi-cylindrical shape, a parabolic shape, or an arc shape.

Turning now to FIG. 7, which shows a cross-sectional view of a conformable pressure vessel 300 with a serpentine flow path that may be in the aircraft emergency evacuation system 100 of FIG. 3, according to an embodiment of the present disclosure. The conformable pressure vessel 300 of FIG. 7 comprises a plurality of individual pressure vessels 330. The individual pressure vessels 330 may have a varying diameter. The individual pressure vessels 330 each have an outer wall 342 enclosing an inner volume 332. As can be seen in FIG. 7, the inner volumes 332 are fluidly connected to each other. In the illustrated embodiment, the inner volumes 332 are fluidly connected to each other through a plurality of elbow connectors 340. The elbow connectors 340 elbow connectors may be operatively connected to the individual pressure vessels 330 through a weld or a threaded connection forming a continuous flow path. Further, the elbow connectors 340 may also be formed from the individual pressure vessels 330 by reducing the diameter at the elbow connectors 340. The individual pressures vessels 330 are oriented parallel to each other, as seen in FIG. 7.

Also, a valve 110 may be operatively connected to one of the pressure vessels 330. The valve 110 in operation may serve as a filling orifice, through which pressurized gas enters the conformable pressure vessel 300. Further, the valve 110 in operation may also serve as an emptying orifice, through which pressurized gas exits the conformable pressure vessel 300 and enters an inflatable rescue apparatus. The pressurized gas may include, but is not limited to nitrogen, carbon dioxide, oxygen, or any other gas or gas mixture known to one of skill in the art. The conformable pressure vessel 300 may also include pressure sensor 150. The pressure sensor 150 in operation detects the pressure of the pressurized gas in the inner volumes 332. The valve 110 and pressure sensor 150 may be mounted together or separately on the conformable pressure vessel 300. In the illustrated embodiment, the individual pressure vessels 330 have an elongated tubular profile. Also in the illustrated embodiment, the individual pressures vessels 330 are coplanar to each other, which gives the conformable pressure vessel 300 a rectangular profile. The individual pressure vessels 330 may not be coplanar (flat planar), but instead they may match the shape of the support structure to which they are mounted using variety of shapes, such as for example, a bent-planar shape, a semi-cylindrical shape, a parabolic shape, or an arc shape. Further in the illustrated embodiment, the conformable pressure vessel 300 may have a variable diameter, meaning that the diameter of the individual pressure vessels D1 may vary from the diameter D2 of the elbow connector 340. For instance, the diameter D2 may be less than diameter D1, as shown in FIG. 7.

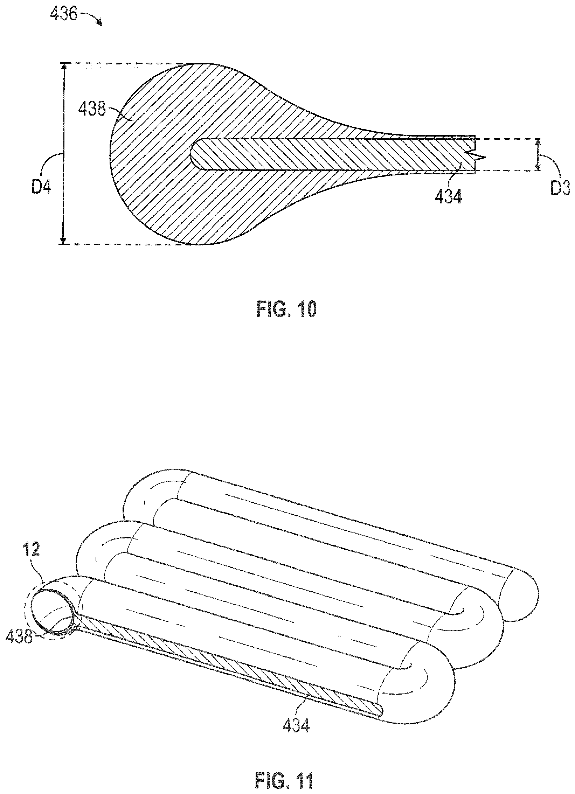

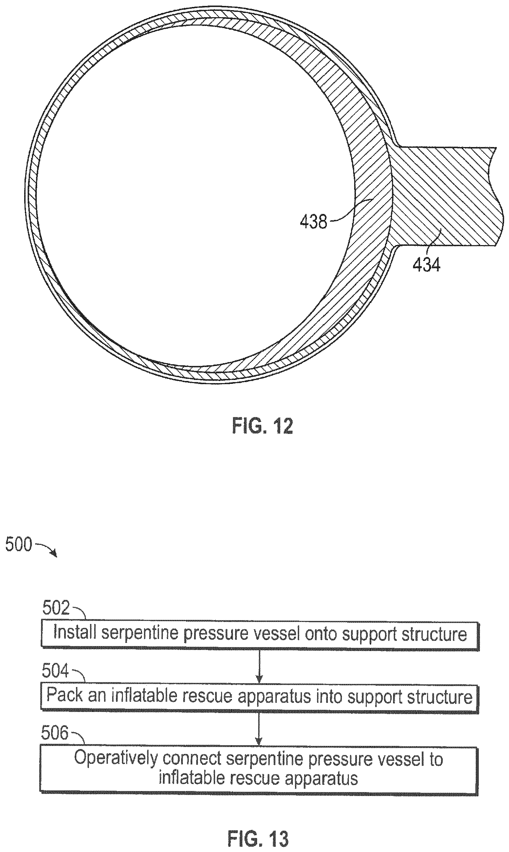

Turning now to FIGs. 8-12. FIG. 8 shows a perspective view of a conformable pressure vessel 400 with a serpentine flow path that may be in the aircraft emergency evacuation system 100 of FIG. 3, according to an embodiment of the present disclosure. FIG. 9 shows a cross-sectional view of the conformable pressure vessel 400 of FIG. 8, according to an embodiment of the present disclosure. FIG. 10 shows an enlarged cross-sectional view of the conformable pressure vessel 400 of FIG. 9, according to an embodiment of the present disclosure. FIG. 11 shows a cross-sectional view of the conformable pressure vessel 400 of FIG. 8, according to an embodiment of the present disclosure. FIG. 12 shows an enlarged cross-sectional view of the conformable pressure vessel 400 of FIG. 9, according to an embodiment of the present disclosure

The conformable pressure vessel 400 comprises a plurality of individual pressure vessels 430 fluidly connected to form a serpentine flow path. The individual pressure vessels 430 each have an outer wall 442 enclosing an inner volume 432. As can be seen in FIG. 9, the inner volumes 432 are fluidly connected to each other. In the illustrated embodiment, the inner volumes 432 are fluidly connected to each other through a plurality of elbow connectors 440. The elbow connectors 440 elbow connectors may be operatively connected to the individual pressure vessels 430 through a weld or a threaded connection forming a continuous flow path. Further, the elbow connectors 440 may also be formed from the individual pressure vessels 430 by reducing the diameter at the elbow connectors 440.

The individual pressures vessels 430 are oriented parallel to each other, as seen in FIGs. 8 and 9. Also, a valve 110 is operatively connected to one of the pressure vessels 430. The valve 110 in operation may serve as a filling orifice, through which pressurized gas enters the conformable pressure vessel 400. Further, the valve 110 in operation may also serve as an emptying orifice, through which pressurized gas exits the conformable pressure vessel 400 and enters an inflatable rescue apparatus. The pressurized gas may include, but is not limited to nitrogen, carbon dioxide, oxygen, or any other gas or gas mixture known to one of skill in the art. The conformable pressure vessel 400 may also include pressure sensor 150. The pressure sensor 150 in operation detects the pressure of the pressurized gas in the inner volumes 432. The valve 110 and pressure sensor 150 may be mounted together or separately on the conformable pressure vessel 400. In the illustrated embodiment, the individual pressure vessels 430 have an elongated tubular profile. Also in the illustrated embodiment, the individual pressures vessels 430 are coplanar to each other, which gives the conformable pressure vessel 400 a rectangular profile. The individual pressure vessels 430 may not be coplanar (flat planar), but instead they may match the shape of the support structure to which they are mounted using variety of shapes, such as for example, a bent planar shape, a semi-cylindrical shape, a parabolic shape, or an arc shape.

In the illustrated embodiment, each individual pressures vessel 430 may share a common outer wall 434 with at least one adjacent individual pressure vessel 430, as seen in FIGs. 9 and 11. Advantageously, sharing a common outer wall 434 provides added strength to the conformable pressure vessel 400. This added strength helps the individual pressure vessels 430 remain parallel to each other and thus helps retain the overall planar and rectangular shape of the conformable pressure vessel 400, when the conformable pressure vessel is filled with compressed gas. Further, in the illustrated embodiment, the thickness D3 of the common outer wall 434 increases at the elbow connector 440 to thickness D4, as seen in FIG 10. The additional material 438 increasing the thickness of the common outer wall 434 may be seen from different angles in FIGs. 10 and 12. Advantageously, the additional material 438 increases the thickness of the common outer wall 434 to strengthen the conformable pressure vessel 400 in known high pressure areas, such as, for example, at the elbow connectors 440.

Referring now to FIG. 13, which shows a flow diagram illustrating a method 500 of assembling the aircraft emergency evacuation system of FIG. 3, according to an embodiment of the present disclosure. The method 500 comprises installing a conformable pressure vessel onto a support structure at block 502. The method 500 also comprises packing an inflatable rescue apparatus into the support structure at block 504. The method 500 further comprises operatively connecting the conformable pressure vessel to the inflatable rescue apparatus at block 506. The method may also include forming the conformable pressure vessel. The conformable pressure vessel may be formed by various methods including but not limited to connecting individual pressure vessels to a manifold, bending tubes, rolling tubes, additive manufacturing, injection molding, or any other method known to one of skill in the art.

While the above description has described the flow process of FIG. 13 in a particular order, it should be appreciated that unless otherwise specifically required in the attached claims that the ordering of the steps may be varied.

## Claims

1. An aircraft emergency evacuation system (10) comprising:
an inflatable rescue apparatus; and
a conformable pressure vessel (200, 300, 400) operatively connected to the inflatable rescue apparatus, wherein the confirmable pressure vessel (200, 300, 400) in operation inflates the inflatable rescue apparatus; wherein the conformable pressure vessel (200, 300, 400) comprises:
a plurality of individual pressure vessels (230, 330, 430), the individual pressure vessels (230, 330, 430) each having an outer wall (242, 342, 442) enclosing an inner volume (232, 332, 432);
wherein the individual pressures vessels (230, 330, 430) are oriented parallel to each other, and wherein a valve 110 is operatively connected to one of the plurality of individual pressure vessels (230, 330, 430), wherein the valve 110 in operation serves as a filling orifice for each of the plurality of individual pressure vessels (230, 330, 430), and wherein the inner volumes (232, 332, 432) are fluidly connected to each other to form a single fluid chamber fluidly connected to the valve;
**characterised in that** the inner volumes (232, 332, 432) are fluidly connected to each other through a plurality of elbow connectors (240, 440); wherein each individual pressure vessel (430) shares a common outer wall (434) of the pressure vessel (430) with at least one adjacent individual pressure vessel (430); and wherein a thickness (D4) of the common outer wall (434) increases at the elbow connector (440).

2. The aircraft emergency evacuation system (10) of claim 1, wherein:
the plurality of individual pressures vessels (230, 330, 430) form at least one of a flat planar shape, a bent planar shape, a semi-cylindrical shape, a parabolic shape, and an arc shape.

3. The aircraft emergency evacuation system (10) of claim 1 or 2, wherein:
the individual pressure vessels (230, 330, 430) have an elongated tubular profile.

4. The aircraft emergency evacuation system (10) of any preceding claim, wherein:
the inner volumes (232) are fluidly connected to each other through a manifold (220).

5. The aircraft emergency evacuation system (10) of any preceding claim, wherein:
each individual pressure vessel (430) shares a common outer wall (434) of the pressure vessel (430) with at least one adjacent individual pressure vessel.

## Patentansprüche

1. Luftfahrzeugnotfallevakuierungssystem (10), umfassend:
ein aufblasbares Rettungsgerät; und
einen anpassbaren Druckbehälter (200, 300, 400), der betriebswirksam mit dem aufblasbaren Rettungsgerät verbunden ist, wobei der anpassbare Druckbehälter (200, 300, 400) im Betrieb das aufblasbare Rettungsgerät aufbläst; wobei der anpassbare Druckbehälter (200, 300, 400) Folgendes umfasst:
eine Vielzahl einzelner Druckbehälter (230, 330, 430), wobei die einzelnen Druckbehälter (230, 330, 430) jeweils eine Außenwand (242, 342, 442) aufweisen, die ein Innenvolumen (232, 332, 432) umschließt;
wobei die einzelnen Druckbehälter (230, 330, 430) parallel zueinander ausgerichtet sind, und wobei ein Ventil 110 betriebswirksam mit einem der Vielzahl von einzelnen Druckbehältern (230, 330, 430) verbunden ist, wobei das Ventil 110 im Betrieb als ein Einfüllstutzen für jeden der Vielzahl von einzelnen Druckbehältern (230, 330, 430) dient, und wobei die Innenvolumen (232, 332, 432) miteinander fluidverbunden sind, um eine einzelne Fluidkammer zu bilden, die mit dem Ventil fluidverbunden ist;
**dadurch gekennzeichnet, dass** die Innenvolumen (232, 332, 432) durch eine Vielzahl von Winkelverbindern (240, 440) miteinander fluidverbunden sind; wobei jeder einzelne Druckbehälter (430) mit mindestens einem benachbarten einzelnen Druckbehälter (430) eine gemeinsame Außenwand (434) des Druckbehälters (430) teilt; und
wobei eine Dicke (D4) der gemeinsamen Außenwand (434) an dem Winkelverbinder (440) zunimmt.

2. Luftfahrzeugnotfallevakuierungssystem (10) nach Anspruch 1, wobei:
die Vielzahl von einzelnen Druckbehältern (230, 330, 430) mindestens eines von einer flachen ebenflächigen Form, einer gebogenen ebenflächigen Form, einer Halbzylinderform, einer Parabelform und einer Bogenform bildet.

3. Luftfahrzeugnotfallevakuierungssystem (10) nach Anspruch 1 oder 2, wobei:
die einzelnen Druckbehälter (230, 330, 430) ein längliches rohrförmiges Profil aufweisen.

4. Luftfahrzeugnotfallevakuierungssystem (10) nach einem der vorstehenden Ansprüche, wobei:
die Innenvolumen (232) durch einen Verteiler (220) miteinander fluidverbunden sind.

5. Luftfahrzeugnotfallevakuierungssystem (10) nach einem der vorstehenden Ansprüche, wobei:
jeder einzelne Druckbehälter (430) mit mindestens einem benachbarten einzelnen Druckbehälter eine gemeinsame Außenwand (434) des Druckbehälters (430) teilt.

## Revendications

1. Système d'évacuation d'urgence d'aéronef (10) comprenant :
un appareil de sauvetage gonflable ; et
une cuve de pression conformable (200, 300, 400) reliée de manière fonctionnelle à l'appareil de sauvetage gonflable, dans lequel la cuve de pression conformable (200, 300, 400) en fonctionnement gonfle l'appareil de sauvetage gonflable ;
dans lequel la cuve de pression conformable (200, 300, 400) comprend :
une pluralité de cuves de pression individuelles (230, 330, 430), les cuves de pression individuelles (230, 330, 430) ayant chacune une paroi extérieure (242, 342, 442) renfermant un volume intérieur (232, 332, 432) ;
dans lequel les cuves de pression individuelles (230, 330, 430) sont orientées parallèlement les unes aux autres, et dans lequel une soupape 110 est reliée de manière fonctionnelle à l'une de la pluralité de cuves de pression individuelles (230, 330, 430), dans lequel la soupape 110 en fonctionnement sert d'orifice de remplissage pour chacune de la pluralité de cuves de pression individuelles (230, 330, 430), et dans lequel les volumes intérieurs (232, 332, 432) sont reliés de manière fluidique les uns aux autres pour former une chambre de fluide unique reliée fluidiquement à la soupape ;
**caractérisé en ce que** les volumes intérieurs (232, 332, 432) sont reliés fluidiquement les uns aux autres par l'intermédiaire d'une pluralité de raccords coudés (240, 440) ; dans lequel chaque cuve de pression individuelle (430) partage une paroi extérieure commune (434) de la cuve de pression (430) avec au moins une cuve de pression individuelle adjacente (430) ; et dans lequel une épaisseur (D4) de la paroi extérieure commune (434) augmente au niveau du raccord coudé (440).

2. Système d'évacuation d'urgence d'aéronef (10) selon la revendication 1, dans lequel :
la pluralité de cuves de pression individuelles (230, 330, 430) forment au moins l'une parmi une forme plane plate, une forme plane courbée, une forme semi-cylindrique, une forme parabolique et une forme en arc.

3. Système d'évacuation d'urgence d'aéronef (10) selon la revendication 1 ou 2, dans lequel :
les cuves de pression individuelles (230, 330, 430) ont un profil tubulaire allongé.

4. Système d'évacuation d'urgence d'aéronef (10) selon une quelconque revendication précédente, dans lequel :
les volumes intérieurs (232) sont reliés fluidiquement les uns aux autres par un collecteur (220).

5. Système d'évacuation d'urgence d'aéronef (10) selon une quelconque revendication précédente, dans lequel :
chaque cuve de pression individuelle (430) partage une paroi extérieure commune (434) de la cuve de pression (430) avec au moins une cuve de pression individuelle adjacente.
